# EUROPEAN PATENT SPECIFICATION

(11) **EP 3 951 464 B1**
(45) Date of publication and mention of the grant of the patent: **27.11.2024**
(21) Application number: 21189797.0
(22) Date of filing: 05.08.2021
(51) Int. Cl.: G02B 6/44, G02B 6/52

(54) **METHOD OF BLOWING AN OPTICAL FIBER UNIT AND OPTICAL FIBER COMMUNICATION LINE**
VERFAHREN ZUM BLASEN EINER FASEROPTISCHEN EINHEIT UND FASEROPTISCHE KOMMUNIKATIONSLEITUNG
PROCÉDÉ DE SOUFFLAGE D'UNE UNITÉ À FIBRE OPTIQUE ET LIGNE DE COMMUNICATION À FIBRE OPTIQUE

(30) Priority: 07.08.2020 IT 202000019606
(43) Date of publication of application: 09.02.2022
(73) Proprietor: Prysmian S.p.A., 20126 Milano (IT)
(72) Inventor: SUTEHALL, Ralph, Bishopstoke, Hampshire SO50 6YU (GB); JAWORSKA, Katarzyna, Bishopstoke, Hampshire SO50 6YU (GB); ROBSON, Ian, Bishopstoke, Hampshire SO50 6YU (GB)
(74) Representative: Colombo, Stefano Paolo

(56) References cited:
- GB-A- 2 409 908
- US-A- 5 781 678
- US-A- 6 022 620
- US-A1- 2007 063 363
- US-A1- 2016 274 324
- US-A1- 2020 048 490

## Description

### BACKGROUND

The present invention relates to an optical fiber unit which is designed to be blown or overblown and to an optical fibre network. In particular, the present invention relates to a method of blowing an optical fiber unit in a tube or microtube. In particular, the present invention also relates to an optical fiber communication line comprising at least one optical fiber unit which has been installed by overblowing in a tube or microtube which is at least partially occupied by another optical fiber unit.

### PRIOR ART

Fibre optic units have been commonly deployed by installing them in ducts by blowing or pulling, burying them in the ground, or suspending them between above-ground poles.

Optical microcabling technology has been introduced for the deployment of fibre optic cables to increase use of the conduit space and to enhance profitability of the current (and/or future) telecommunications infrastructure. This technology involves the use of standard inner ducts in which microtubes are jetted, followed by the jetting of microtube cables or microcables into the microtubes when required. Although originally intended for business access networks (FTTB) and fibre-to-the-home (FTTH), this technology has been used successfully in long-haul applications as well.

In some known blown optical fibre units, a number of coated optical fibres (for example, four, in bundles or ribbon, but also a single optical fibre) are contained within an inner layer enclosed in an outer layer having greater hardness. In the outer layer particulate material (typically hollow or solid glass beads) can be embedded.

EP 3 637 165 A1 discloses a method of installing a cable through a duct by blowing the cable with a stream of compressed air. The method comprises dispersing a nebulized lubricant in the stream of compressed air, causing the stream of compressed air to deposit the nebulized lubricant onto the cable and to blow it into the duct. It is developed and described specifically also for overblowing.

US 5,781,678A discloses an optical fiber path joint member and method of blowing optical fibers such that they are introduced from respective sub-paths into a main path, thereby inserting fibres into a main duct. The optical fibre path joint has a main path with an inlet and an outlet at respective ends. At least one joint path joins the main path.

In general, overblowing is a relatively new technology which is often based on development of well-known optical cable blowing, including peculiar devices used for the cable injections and peculiar method. Few documents disclose specific cable configuration for overblowing, since blowing cables are usually suitable.

### SUMMARY OF THE INVENTION

For the purposes of the present description and appended claims, the term "optical fibre" is meant to indicate an optical glass core surrounded by a glass cladding and a coating system comprising one or more layers of cured resins, for example acrylate resins. The optical fibers may be single mode or multimode optical fibers with a nominal diameter between about 180 µm and about 250 µm. Relative to each other, the optical fibers may have a length difference of less than about 0.03 %. The optical fibers generally extend in a longitudinal direction.

A known optical fibre unit specifically engineered for blown fibre applications typically comprises one or more optical fibres initially encapsulated in a soft inner acrylate layer which cushions the fibres, followed by an outer harder layer which protects the fibres from external damage. Finally, there is provided a low-friction layer that helps to maximise blowing distance. The low friction layer of a known optical fiber unit typically comprises beads of glass or the like.

For the purposes of the present description and appended claims, a microtube is a tube having an inner diameter less of 8.0 mm, for instance less than 5 mm or 4.0 mm or 3.5 mm. The microtube can be made, at least partially, of medium density polyethylene, of high density polyethylene or Low smoke zero halogen (LSOH). However, a microtube could be made of a material different from the above.

For the purposes of the present description and appended claims, a cross sectional area of a microtube is the area of the inner section of the microtube. For instance, in case of a microtube having an inner diameter of 3.5 mm, the cross sectional area is 9.62 mm² (r² X 3.14).

For the purposes of the present description and appended claims, a free space in a microtube containing an optical fiber unit is a difference between the cross sectional area of the microtube and the area of the optical fiber unit. In turn, the area of the optical fiber unit is calculated based on the nominal diameter of the optical fiber unit. For instance, the free space of a microtube having an inner diameter of 3.5 mm containing an optical fiber unit having a nominal diameter of 1.0 mm is 8.83 mm². Similarly, a free space in a microtube containing two or more optical fiber units is a difference between the cross sectional area of the microtube and the areas of the optical fiber units (being calculated based on the nominal diameter of the optical fiber units).

For the purposes of the present description and appended claims, the term "smooth" referred to a material surface (for instance, the outer surface of a sheath of an optical fiber unit) will mean a material surface devoid of beads or similar particles and having a coefficient of friction less than 0.15. In embodiments, the coefficient of friction is less than 0.14. In embodiments, the coefficient of friction is less than 0.10. In embodiments, the coefficient of friction is 0.09. The coefficient of friction could be measured by IEC/TR 62470:2011.

For the purpose of the present description and of the appended claims:
- the term "radial" is used to indicate a direction perpendicular to a reference longitudinal axis of the optical fiber unit;
- the expressions "radially inner" and "radially outer" are used to indicate a position along a radial direction with respect to the above-mentioned longitudinal axis;
- a size along the radial direction is termed "thickness"; and
- the verb "to embed" means to enclose closely in or as if in a matrix.

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

In order to limit the installation work for the deployment of new optical cables, the Applicant has explored the possibility to install a new optical fiber unit in an existing microtube which contains an optical fiber unit already installed.

The Applicant has realized that overblowing of an optical fiber unit in a small diameter microtube could be difficult or even not possible due to the very limited space available for air passage when the microtube is partially occupied by an already deployed optical fiber unit. The use of lubricant could improve the situation but indeed it does not solve the problem in small ducts or microtubes.

According to an aspect of the present invention, there is provided a method of blowing a second optical fiber unit in a microtube, wherein the microtube contains a first optical fiber unit and wherein a free space in the microtube with the first optical fiber unit contained therein is less than 40 mm², wherein the first optical fiber unit has a first sheath comprising beads at least partially embedded in the first sheath,
the method including
providing the second optical fiber unit comprising a second sheath, wherein the second sheath is a smooth surface polymeric sheath which comprises (or essentially consists of) a thermoplastic polymer and which includes an adherence reducing substance comprising ultra fine graphite particles or molybdenum disulphide of polytetrafluoroethylene particles and
blowing the second optical fiber unit in the microtube containing the first optical fiber unit.

According to embodiments, the thermoplastic polymer is a high density polyethylene.

According to embodiments, the second sheath does not comprises beads.

According to embodiments, the second sheath comprises an additive masterbatch containing a slip agent as additive and a carrier, wherein the carrier comprises low density polyethylene.

According to embodiments, the second sheath comprises an additive masterbatch containing a slip agent as additive and a carrier, wherein the additive comprises a permanent slip agent based on silicon and wherein the carrier is low density polyethylene.

According to embodiments, blowing the second optical fiber unit comprises blowing the second optical fiber unit with a rated air flow less than 40 l/min.

According to embodiments, the rated air flow is less than 20 l/min.

According to embodiments, blowing the second optical fiber unit comprises blowing at a rated pressure of 10 bar.

According to embodiments, the free space is less than 15 mm².

According to a second aspect of the present invention, there is provided an optical fiber communication line comprising a microtube and a first optical fiber unit contained in the microtube,
wherein the first optical fiber unit has a first sheath comprising beads at least partially embedded in the first sheath,
wherein a free space in the microtube with the first optical fiber unit contained therein is less than 40 mm²,
wherein the optical fiber communication line further comprises a second optical fiber unit blown in the microtube,
wherein the second optical fiber unit comprises a second sheath,
wherein the second sheath is a smooth surface polymeric sheath which comprises a thermoplastic polymer and which includes an adherence reducing substance comprising ultra fine graphite particles or molybdenum disulphide of polytetrafluoroethylene particles.

According to embodiments, the thermoplastic polymer is a high density polyethylene.

According to embodiments, the second sheath does not comprises beads.

According to embodiments, the second optical fiber unit comprises one or more optical conductors and an encapsulating layer encapsulating the one or more optical conductors, wherein the encapsulating layer comprises a thermoplastic or thermosetting polymer derived from acrylic acid, methacrylic acid or other related compounds. The main benefit with this system is that the unit is stiffer than the loose tube types so it will have an improved blowing performance.

According to embodiments, the encapsulating layer comprises an ultraviolet, UV, curable acrylate resin.

According to embodiments, the encapsulating layer comprises at least two layers, an outer layer and an inner layer, wherein the two layers have different Secant Modulus, with the outer layer having a Secant Modulus higher than the Secant Modulus of the inner layer.

### BRIEF DESCRIPTION OF DRAWINGS

The present invention will be further described in the following detailed description, given by way of example and not of limitation, with reference to the following figures, wherein:
- Figure 1 shows a cross-section of a microtube with a first blown optical fibre unit;
- Figure 2 shows an enlarged cross-section of a second optical fiber unit; and
- Figure 3 shows the microtube of Figure 1 with the second optical fibre unit of Figure 2 which has been installed according to the present invention.

### DESCRIPTION OF EXAMPLES

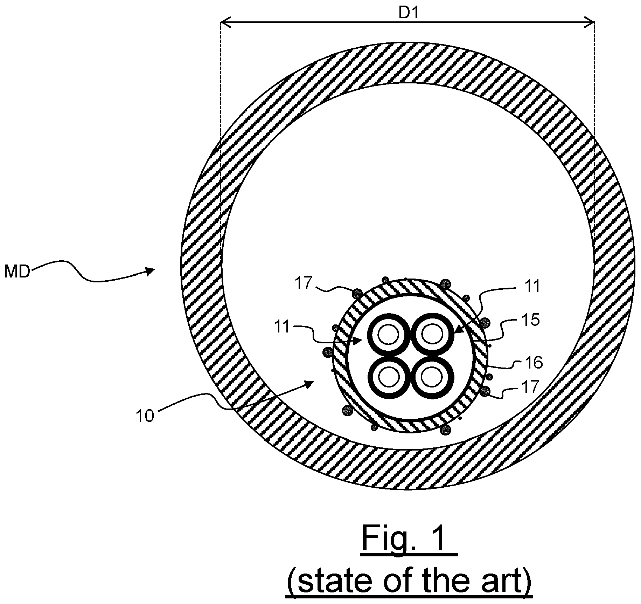

Figure 1 shows a cross-section of a microtube MD having an inner diameter D1. A microtube has been defined above and further details will not be given here.

According to the present invention, in the microtube MD a known optical fiber unit 10 has been installed, typically by blowing.

Fiber unit 10 could comprise a number of optical fibers 11, for example four as in the drawing, a layer of resin matrix radially outer with respect to the optical fibers 11 and a low friction outer layer coating 16 with beads of glass or the like, at least partially embedded in the outer layer 16.

As indicated above, the free space in microtube MD containing optical fiber unit 10 is a difference between the cross sectional area of the microtube MD and the area of the optical fiber unit 10. In turn, the area of the optical fiber unit 10 is calculated based on the nominal diameter of the optical fiber unit 10. For instance, the free space of microtube MD having an inner diameter D1 of 3.5 mm containing optical fiber unit 10 having a nominal diameter of 1.0 mm is 8.83 mm².

The Applicant has realized that blowing or overblowing a second optical fiber unit as the first optical fiber unit 10 would not be possible in view of the reduced free space. In fact, the free space has a direct influence on the rated air flow: if the free space is low, the rated air flow is correspondingly low and a second optical fiber unit could not be blown.

The issue with fibre unit overblowing in small diameter microtubes is that the level of compressed air travelling through the microtube, typically 18 l/min at 10 bar pressure in a 500 m route, compared with 1500 l/min in a cable overblowing route using a 20 mm bore subduct. In view of this, the coefficient of friction of the overblowing fibre unit must be very low as this is the most important factor in any blown system and there is not a sufficiently high volume of air passing through the micro-duct to overcome high coefficient of friction systems.

It was found that overblowing an optical fiber unit over another one was not possible due to the high coefficient of friction between the two optical fiber units.

Coefficient of friction tests were conducted in accordance with IEC/TR 62470:2011. The results obtained are in the table below:

| | Coeff. of friction |
|---|---|
| First optical fiber unit | 0.15 |
| Second optical fiber unit | 0.09 |

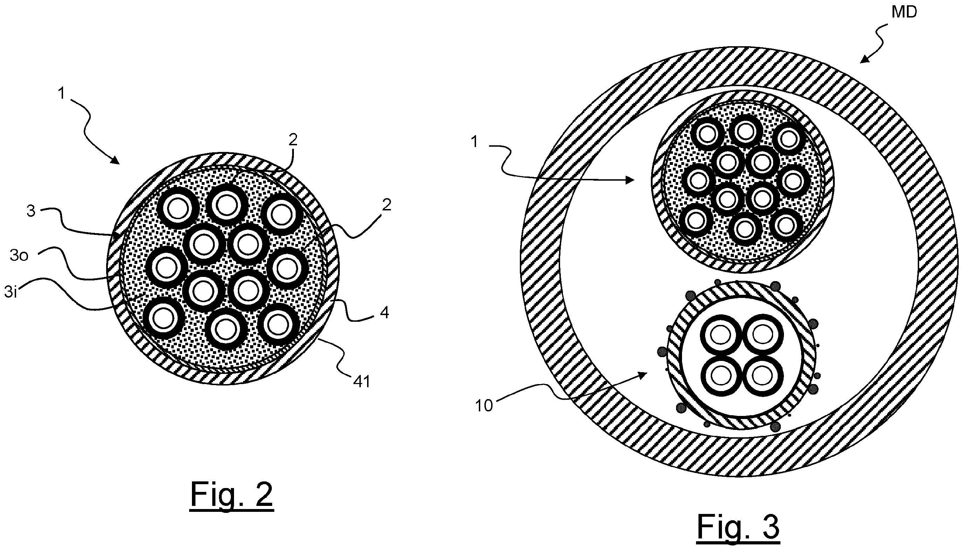

This issue was solved by using a smooth plastic sheathed fibre unit as shown, for instance, in the enlarged cross section of Figure 2.

As shown in Figure 2, the optical conductors 2 could be encapsulated in a layer 3 of a thermoplastic or thermosetting polymer derived from acrylic acid, methacrylic acid or other related compounds. Such layer 3 could comprise an acrylate resin. In embodiments, such resin comprises a ultraviolet (UV) curable acrylate resin.

The optical conductors 2 can be arranged in different ways in the layer 3. The arrangement of Figure 1 is not limiting for the invention.

In the example with twelve optical conductors 2, the encapsulating layer 3 can have an outer diameter of about 1.3 mm so that the optical conductors 2 become completely, or substantially completely, embedded in the encapsulating layer. In arrangements with a higher or lower number of optical conductors, the outer diameter of the encapsulating layer can be changed accordingly.

In embodiments, the encapsulating layer 3 comprises at least two layers, an outer layer 3o and an inner layer 3i. The two layers have different Secant Modulus, with the outer layer 3o having a higher Secant Modulus than the inner layer 3i. The low Modulus inner layer 3i prevents that external forces acting on the unit are transferred to the optical conductors, additionally low Modulus inner layer 3i provides for easy installation in the field as it can be easily removed from the optical conductors, without damaging them.

In embodiments, inner layer 3i has a diameter between about 50 % and about 90 % of the outer diameter of encapsulating layer 3. The inner layer 3i could have a diameter of about 85 % of the outer diameter of encapsulating layer 3.

In embodiments, inner layer 3i essentially surrounds each optical conductor so that there is at least some material with a thickness of about 1 µm to about 10 µm between two adjacent optical conductors over the majority of the length.

In embodiments, the outer layer 3o is a resin and comprises a hard, fast curing matrix material.

According to an example of the invention, the inner layer 3i is a resin and comprises Cablelite ^{®} 3287-9-39A and the resin of outer layer 3o comprises Cablelite ^{®} 3287-9-75, both manufactured by DSM Desotech Inc.. The resin of inner layer 3i could essentially consist of Cablelite ^{®} 3287-9-39A and the resin of outer layer 3o could essentially consist of Cablelite ^{®} 3287-9-75.

According to the present invention, a smooth sheath 4 is applied radially outer to the encapsulating layer 3. According to the invention, smooth sheath 4 does not comprise glass beads or the like, at least partially embedded in the sheath.

In embodiments, the radial thickness of sheath 4 is between about 100 µm and 250 µm, for instance between 100 µm and 200 µm. In examples, the radial thickness of sheath 4 is about 150 µm.

In addition to compactness, the unit according to the present invention also provides easy access to the optical conductors, as it will become clear in the following.

Sheath 4 could substantially consist of a thermoplastic polymer. In embodiments, the thermoplastic polymer is a high density polyethylene (HDPE), typically having a density of about 0.950 g/cm³ (ASTM D792, 2013) and hardness equal to or higher than 59 Shore D (ASTM D2240, 2005 and re-approved in 2010).

In one example, sheath 4 is substantially consisting of a black, bimodal co-polymer high density polyethylene (HDPE) characterized by at least one of low shrink-back, excellent stress-crack resistance, good melt strength and wide processing window. One thermoplastic polymer adapted for the sheath 4 is Borealis Borstar^{®} HE6062. One alternative is Borealis Borstar^{®} grade HE6067.

In embodiments, sheath 4 is extruded over the encapsulating layer 3. According to embodiments of the present invention, the sheath 4 is over and in close contact with the outer layer 3o of resin material.

The sheath 4 has a coating 41 in the form of adherence reducing substance. In embodiments, the adherence reducing substance comprises ultra fine graphite particles.

In an embodiment, the coating 41 comprises graphite particles having a nominal diameter of 1 to 2 microns with a maximum value of 8 microns.

Alternatively, other adherence reducing materials can be used, such as molybdenum disulfide of polytetrafluoroethylene (PTFE) particles.

The sheath 4 has a radial thickness of not more than about 0.3 mm, for instance of not more than about 0.2 mm. The thickness could be not lower than about 0.05 mm. The thickness could be in the region of 0.05 to 0.15 mm. In an embodiment the sheath has an outside diameter of 1.35 mm +/- 0.05 mm and an inside diameter of 1.1 mm +/- 0.05 mm.

The sheath may be made from a polymeric composition including a polymeric material and optionally an inert filler. The polymeric material can be for instance a polyolefin, such as polyethylene, polypropylene, ethylenepropylene copolymer or nylon. Inorganic fillers which can generally be used are hydroxides, hydrated oxides, salts or hydrated salts of metals, in particular of calcium, magnesium, or aluminium, also in admixture with other inorganic fillers such as silicates. The amount of inorganic filler may vary for instance from about 40% to about 90% by weight of the total weight of the polymeric composition. Conventional additives such as stabilizers, antioxidants, processing agents and coupling agents can be incorporated into the polymeric composition.

The sheath 4 may contain water blocking means, e.g. in the form of a grease like or oily filler such as, for instance, a silicon oil based filling composition. Alternatively, the water blocking means can be in the form of water swellable powder compositions, for instance a mixture of polyacrylate particles and talc particles, as described in International Patent Application WO 00/58768.

The sheath 4 could comprise an additive masterbatch, for example OnCap^{™} SL PE 1108 or SL PE 6142 of Polyone Corporation, Avon Lake, Ohio, U.S.A.

In particular, masterbatch SL PE 1108 contains a slip agent as additive and the carrier is LDPE (low density polyethylene).

In particular, masterbatch SL PE 6142 contains a permanent slip agent based on silicon as additive and the carrier is LDPE (low density polyethylene).

The Applicant has conducted several tests in an attempt to blow one or more optical fiber units in a microtube as the microtube MD of Figure 1, wherein a first optical fiber unit 10 was already present. The microtube MD used for the tests had an inner diameter D1 of 3.5 mm. The first optical fiber unit 10 had a nominal diameter of 1.0 mm and a coefficient of friction of 0.15.

The second optical fiber unit used for the tests had the same structure, substantially as disclosed above. Three different diameters were used: 1.5 mm, 1.6 mm and 1.7 mm. In the following, the results for the 1.5 mm will be given.

In the stage before blowing the second optical fiber unit 1, a free space of 8.83 mm² was present. After blowing the 1.5 mm optical fiber unit 1 with a coefficient of friction of 0.09, the free space became 7.06 mm².

The Applicant measured a further parameter both before blowing the second optical fiber unit 1 and after blowing the 1.5 mm optical fiber unit 1 with a coefficient of friction of 0.09. The further parameter was the fill factor. For the purpose of the present description and of the appended claims, a fill factor is a percentage of the area of the optical fiber unit(s) versus the full inner area of the microtube (calculated based on the inner diameter of the microtube).

The fill factor was initially 8.2 % and, after blowing the second optical fiber unit, it was 29.1 %.

Noteworthy is the radial clearance obtained with the overblowing method of the present invention. The radial clearance is defined as the difference between the inner diameter of the duct or microtube and the diameters of the optical fiber units inserted in it. It is common practice to consider 2 mm the minimum value of radial clearance required for overblowing. The method of the present invention permits to reduce the value of radial clearance below 2 mm. The present method can provide radial clearance equal or lower than 1 mm. In the examples proposed above, the radial clearance obtained is 1 mm with a 1.5 mm diameter optical fiber unit 1 and 0.8 mm with a 1.7 mm diameter optical fiber unit 1.

Advantageously, the blowing was made by a Sirocco Blowing Head which is designed for the installation of Enhanced Performance Fibre Units into tubes using compressed air. The Sirocco Blowing Head is used in conjunction with a compressor that provides clean, dry, technically oil-free air at 10-bar to propel the fibre unit through the tube.

## Claims

1. A method of blowing a second optical fiber unit (1) in a microtube (MD), wherein the microtube (MD) contains a first optical fiber unit (10) and wherein a free space in the microtube with the first optical fiber unit (10) contained therein is less than 40 mm², wherein the first optical fiber unit (10) has a first sheath (16) comprising beads at least partially embedded in the first sheath (16),
the method including
providing the second optical fiber unit (1) comprising a second sheath (4), wherein the second sheath (4) is a smooth surface polymeric sheath (4) which comprises a thermoplastic polymer and which includes an adherence reducing substance comprising ultra fine graphite particles or molybdenum disulphide of polytetrafluoroethylene particles and
blowing the second optical fiber unit (1) in the microtube (MD) containing the first optical fiber unit (10).

2. The method of claim 1, wherein the thermoplastic polymer is a high density polyethylene.

3. The method of claim 1, wherein the second sheath (4) does not comprises beads.

4. The method of claim 1, wherein the second sheath (4) comprises an additive masterbatch containing a slip agent as additive and a carrier, wherein the carrier comprises low density polyethylene.

5. The method of claim 1, wherein the second sheath (4) comprises an additive masterbatch containing a slip agent as additive and a carrier, wherein the additive comprises a permanent slip agent based on silicon and wherein the carrier is low density polyethylene.

6. The method of any of claims 1-5, wherein blowing the second optical fiber unit (1) comprises blowing the second optical fiber unit (1) with a rated air flow less than 40 l/min.

7. The method of claim 6, wherein the rated air flow is less than 20 l/min.

8. The method of any of the previous claims, wherein blowing the second optical fiber unit (1) comprises blowing at a rated pressure of 10 bar.

9. The method of any of the previous claims, wherein the free space is less than 15 mm².

10. An optical fiber communication line comprising a microtube (MD) and a first optical fiber unit (10) contained in the microtube (MD),
wherein the first optical fiber unit (10) has a first sheath (16) comprising beads at least partially embedded in the first sheath (16),
wherein a free space in the microtube (MD) with the first optical fiber unit (10) contained therein is less than 40 mm²,
wherein the optical fiber communication line further comprises a second optical fiber unit (1) blown in the microtube (MD),
wherein the second optical fiber unit (1) comprises a second sheath (4),
wherein the second sheath (4) is a smooth surface polymeric sheath (4) which comprises a thermoplastic polymer and which includes an adherence reducing substance comprising ultra fine graphite particles or molybdenum disulphide of polytetrafluoroethylene particles.

11. The optical fiber communication line of claim 10, wherein the thermoplastic polymer is a high density polyethylene.

12. The optical fiber communication line of claim 10 or 11, wherein the second sheath (4) does not comprises beads.

13. The optical fiber communication line of claim 10, 11 or 12, wherein the second optical fiber unit (1) comprises one or more optical conductors (2) and an encapsulating layer (3) encapsulating the one or more optical conductors (2), wherein the encapsulating layer (3) comprises a thermoplastic or thermosetting polymer derived from acrylic acid, methacrylic acid or other related compounds.

14. The optical fiber communication line of claim 13, wherein the encapsulating layer (3) comprises an ultraviolet, UV, curable acrylate resin.

15. The optical fiber communication line of any of claims 10-14, wherein the encapsulating layer (3) comprises at least two layers, an outer layer (3o) and an inner layer (3i), wherein the two layers have different Secant Modulus, with the outer layer (3o) having a Secant Modulus higher than the Secant Modulus of the inner layer (3i).

## Patentansprüche

1. Verfahren zum Einblasen einer zweiten optischen Fasereinheit (1) in ein Mikroröhrchen (MD), wobei das Mikroröhrchen (MD) eine erste optische Fasereinheit (10) enthält und wobei ein freier Raum in dem Mikroröhrchen mit der darin enthaltenen ersten optischen Fasereinheit (10) weniger als 40mm² beträgt, wobei die erste optische Fasereinheit (10) einen ersten Mantel (16) aufweist, der Perlen umfasst, die zumindest teilweise in den ersten Mantel (16) eingebettet sind, wobei das Verfahren
das Bereitstellen der zweiten optischen Fasereinheit (1), die eine zweite Hülle (4) umfasst, wobei die zweite Hülle (4) eine polymere Hülle (4) mit glatter Oberfläche ist, die ein thermoplastisches Polymer umfasst und die eine haftungsvermindernde Substanz enthält, die ultrafeine Graphitteilchen oder Molybdändisulfid von Polytetrafluorethylen-Teilchen umfasst, und
das Blasen der zweiten optischen Fasereinheit (1) in das Mikroröhrchen (MD), das die erste optische Fasereinheit (10) enthält, umfasst.

2. Verfahren nach Anspruch 1, wobei das thermoplastische Polymer ein Polyethylen hoher Dichte ist.

3. Verfahren nach Anspruch 1, wobei die zweite Hülle (4) keine Perlen enthält.

4. Verfahren nach Anspruch 1, wobei die zweite Hülle (4) ein Additiv-Masterbatch umfasst, das ein Gleitmittel als Additiv und einen Träger enthält, wobei der Träger Polyethylen niedriger Dichte umfasst.

5. Verfahren nach Anspruch 1, wobei die zweite Hülle (4) ein Additiv-Masterbatch umfasst, das ein Gleitmittel als Additiv und einen Träger enthält, wobei das Additiv ein permanentes Gleitmittel auf Basis von Silicium umfasst und wobei der Träger Polyethylen niedriger Dichte ist.

6. Verfahren nach einem der Ansprüche 1 bis 5, wobei das Blasen der zweiten optischen Fasereinheit (1) mit einem Nennluftstrom von weniger als 40 l/min umfasst.

7. Verfahren nach Anspruch 6, wobei der Nennluftstrom weniger als 20 l/min beträgt.

8. Verfahren nach einem der vorhergehenden Ansprüche, wobei das Blasen der zweiten optischen Fasereinheit (1) das Blasen mit einem Nenndruck von 10 bar umfasst.

9. Verfahren nach einem der vorhergehenden Ansprüche, wobei der freie Raum weniger als 15 mm² beträgt.

10. Faseroptische Kommunikationsleitung mit einem Mikroröhrchen (MD) und einer ersten Lichtwellenleiter-Einheit (10), die in dem Mikroröhrchen (MD) enthalten ist, wobei die erste Lichtwellenleiter-Einheit (10) einen ersten Mantel (16) aufweist, der Perlen umfasst, die zumindest teilweise in dem ersten Mantel (16) eingebettet sind, wobei ein freier Raum in dem Mikroröhrchen (MD) mit der darin enthaltenen ersten Lichtwellenleiter-Einheit (10) weniger als 40 mm² beträgt, wobei die Lichtwellenleiter-Kommunikationsleitung ferner eine zweite Lichtwellenleiter-Einheit (1) umfasst, die in das Mikroröhrchen (MD) eingeblasen ist, wobei die zweite Lichtwellenleiter-Einheit (1) eine zweite Umhüllung (4) umfasst, wobei die zweite Umhüllung (4) eine polymere Umhüllung (4) mit glatter Oberfläche ist, die ein thermoplastisches Polymer umfasst und die eine adhäsionsvermindernde Substanz einschließt, die ultrafeine Graphitpartikel oder Molybdändisulfid von Polytetrafluorethylenpartikeln umfasst.

11. Faseroptische Kommunikationsleitung nach Anspruch 10, wobei das thermoplastische Polymer ein Polyethylen hoher Dichte ist.

12. Faseroptische Kommunikationsleitung nach Anspruch 10 oder 11, wobei die zweite Umhüllung (4) keine Wülste aufweist.

13. Faseroptische Kommunikationsleitung nach Anspruch 10, 11 oder 12, wobei die zweite faseroptische Einheit (1) einen oder mehrere optische Leiter (2) und eine Einkapselungsschicht (3) umfasst, die den einen oder die mehreren optischen Leiter (2) einkapselt, wobei die Einkapselungsschicht (3) ein thermoplastisches oder wärmehärtbares Polymer umfasst, das von Acrylsäure, Methacrylsäure oder anderen verwandten Verbindungen abgeleitet ist.

14. Faseroptische Kommunikationsleitung nach Anspruch 13, wobei die Einkapselungsschicht (3) ein ultraviolett, UV, härtbares Acrylatharz umfasst.

15. Faseroptische Kommunikationsleitung nach einem der Ansprüche 10 bis 14, wobei die Einkapselungsschicht (3) mindestens zwei Schichten umfasst, eine äußere Schicht (3o) und eine innere Schicht (3i), wobei die beiden Schichten unterschiedliche Sekantenmodule aufweisen, wobei die äußere Schicht (3o) einen höheren Sekantenmodul als der Sekantenmodul der inneren Schicht (3i) aufweist.

## Revendications

1. Procédé de soufflage d'une deuxième unité à fibre optique (1) dans un microtube (MD), dans lequel le microtube (MD) contient une première unité à fibre optique (10) et dans lequel un espace libre dans le microtube avec la première unité à fibre optique (10) contenue dans celui-ci est inférieur à 40 mm², dans lequel la première unité à fibre optique (10) a une première gaine (16) comprenant des bourrelets au moins partiellement intégrés dans la première gaine (16),
le procédé comportant
la fourniture de la deuxième unité à fibre optique (1) comprenant une deuxième gaine (4), dans lequel la deuxième gaine (4) est une gaine polymère de surface lisse (4) qui comprend un polymère thermoplastique et qui inclut une substance de réduction d'adhérence qui comporte des particules de graphite ultrafines ou des particules de disulfure de molybdène de polytétrafluoroéthylène, et
le soufflage de la deuxième unité à fibre optique (1) dans le microtube (MD) contenant la première unité à fibre optique (10).

2. Procédé selon la revendication 1, dans lequel le polymère thermoplastique est un polyéthylène haute densité.

3. Procédé selon la revendication 1, dans lequel la deuxième gaine (4) ne comprend pas de bourrelets.

4. Procédé selon la revendication 1, dans lequel la deuxième gaine (4) comprend un mélange-maître d'additifs contenant un agent glissant comme additif et un support, dans lequel le support comprend du polyéthylène basse densité.

5. Procédé selon la revendication 1, dans lequel la deuxième gaine (4) comprend un mélange-maître d'additifs contenant un agent glissant comme additif et un support, dans lequel l'additif comprend un agent glissant permanent à base de silicium et dans lequel le support est du polyéthylène basse densité.

6. Procédé selon l'une quelconque des revendications 1 à 5, dans lequel le soufflage de la deuxième unité à fibre optique (1) comprend le soufflage de la deuxième unité à fibre optique (1) avec un débit d'air nominal inférieur à 40 l/min.

7. Procédé selon la revendication 6, dans lequel le débit d'air nominal est inférieur à 20 l/min.

8. Procédé selon l'une quelconque des revendications précédentes, dans lequel le soufflage de la deuxième unité à fibre optique (1) comprend le soufflage à une pression nominale de 10 bars.

9. Procédé selon l'une quelconque des revendications précédentes, dans lequel l'espace libre est inférieur à 15 mm².

10. Ligne de communication à fibre optique comprenant un microtube (MD) et une première unité à fibre optique (10) contenue dans le microtube (MD), dans laquelle la première unité à fibre optique (10) a une première gaine (16) comprenant des bourrelets au moins partiellement intégrés dans la première gaine (16),
dans laquelle un espace libre dans le microtube (MD) avec la première unité à fibre optique (10) contenue dans celui-ci est inférieur à 40 mm²,
dans laquelle la ligne de communication à fibre optique comprend en outre une deuxième unité à fibre optique (1) soufflée dans le microtube (MD),
dans laquelle la deuxième unité à fibre optique (1) comprend une deuxième gaine (4),
dans laquelle la deuxième gaine (4) est une gaine polymère de surface lisse (4) qui comprend un polymère thermoplastique et qui inclut une substance de réduction d'adhérence qui comporte des particules de graphite ultrafines ou des particules de disulfure de molybdène de polytétrafluoroéthylène.

11. Ligne de communication à fibre optique selon la revendication 10, dans laquelle le polymère thermoplastique est un polyéthylène haute densité.

12. Ligne de communication à fibre optique selon la revendication 10 ou 11, dans laquelle la deuxième gaine (4) ne comprend pas de bourrelets.

13. Ligne de communication à fibre optique selon la revendication 10, 11 ou 12, dans laquelle la deuxième unité à fibre optique (1) comprend un ou plusieurs conducteurs optiques (2) et une couche d'encapsulation (3) encapsulant les un ou plusieurs conducteurs optiques (2), dans laquelle la couche d'encapsulation (3) comprend un polymère thermoplastique ou thermodurcissable dérivé d'acide acrylique, d'acide méthacrylique ou d'autres composés apparentés.

14. Ligne de communication à fibre optique selon la revendication 13, dans laquelle la couche d'encapsulation (3) comprend une résine acrylate durcissable par ultraviolets, UV.

15. Ligne de communication à fibre optique selon l'une quelconque des revendications 10 à 14, dans laquelle la couche d'encapsulation (3) comprend au moins deux couches, une couche extérieure (3o) et une couche intérieure (3i), dans laquelle les deux couches présentent un module sécant différent, la couche extérieure (3o) présentant un module sécant supérieur au module sécant de la couche intérieure (3i).
